# EUROPÄISCHE PATENTANMELDUNG

(11) **EP 1 795 407 A2**
(43) Veröffentlichungstag der Anmeldung: **13.06.2007**
(21) Anmeldenummer: 06025332.5
(22) Anmeldetag: 07.12.2006
(51) Int. Cl.: B60S 3/00

(54) **Einrichtung und Verfahren zum Schleppen von Fahrzeugen**

(30) Priorität: 09.12.2005 DE 202005019417 U
(71) Anmelder: Otto Christ AG, 87734 Benningen (DE)
(72) Erfinder: Christ, Markus, 87700 Memmingen (DE)
(74) Vertreter: Ernicke, Klaus Stefan

(57) **Zusammenfassung**

Die Erfindung betrifft ein Verfahren und eine Einrichtung zum Schleppen von Fahrzeugen (2) in Autowaschstrassen (1), wobei das Fahrzeugrad (3) mit mindestens einem Schleppelement und mindestens einem damit lösbar verbundenen Mitnehmer (14) geschleppt wird. Mittels einer Vorrichtung (15) können das Schleppelement (11) und der Mitnehmer (14) getrennt und verbunden werden. Die vom Schleppelement (11) gelösten Mitnehmer (14) können zwischengespeichert werden.

## Beschreibung

Die Erfindung betrifft eine Einrichtung und ein Verfahren zum Schleppen von Fahrzeugen in Fahrzeugbehandlungsanlagen, insbesondere in Autowaschstraßen, mit den Merkmalen im Oberbegriff des Verfahrens- und Vorrichtungshauptanspruchs.

Eine solche Schleppeinrichtung ist aus der DE 37 32 542 C1 bekannt. Sie besteht aus einem als Doppelstrangkette ausgebildeten Schleppelement, wobei zwischen den Kettensträngen rollenförmige Mitnehmer angeordnet sind, die das Fahrzeugrad hintergreifen und beim Kettenumlauf vorwärts bewegen. Die Mitnehmer sind fest und in vorgegebenen Abständen mit den beiden Kettensträngen verbunden. Die beiden Kettenstränge laufen bei dieser Kettenform offen und führen die Fahrzeugräder seitlich.

Aus der DE 20 17 089 A1 ist eine andere Variante einer Schleppkette bekannt, die ebenfalls als Doppelstrangkette mit fest eingehängten Mitnehmern ausgebildet ist, wobei hierbei allerdings die Kettenstränge unter einer stationären Abdeckung laufen und diese Abdeckung die seitliche Führung für die Fahrzeugräder bildet.

Es ist Aufgabe der vorliegenden Erfindung, eine bessere Schlepptechnik aufzuzeigen.

Die Erfindung löst diese Aufgabe mit den Merkmalen im Hauptanspruch.
Die beanspruchte Schleppeinrichtung und das Schleppverfahren haben den Vorteil, dass die lösbaren Mitnehmer bedarfsweise mit dem Schleppelement verbunden werden können. Hierdurch kann sich die Mitnehmerzahl nach der Anlagenauslastung oder nach anderen Kriterien richten.

Dies wirkt dem Verschleiß der z.B. als Rollkörper ausgebildeten Mitnehmer entgegen. Dies ermöglicht es, die Mitnehmer Umwelteinflüssen, wie Feuchtigkeit, Schmutz, Wasch- und Pflegemittel, Vereisung und dergl. nur dann auszusetzen, wenn dies funktionell erforderlich ist.

Ein weiterer Vorteil ist die Möglichkeit die Abstände der Mitnehmer zu verändern. Bei vorbekannten Schleppketten mit fest montierten Mitnehmern ist die Mitnehmerteilung fest vorgegeben und kann nicht verändert werden. Mit der erfindungsgemäßen Schleppeinrichtung lässt sich der Mitnehmerabstand nach Bedarf einstellen, wobei auch die Fahrzeugabstände zu Gunsten einer höheren Anlagenauslastung verringert werden können. Mit dem Abstand kann sich auch die Zahl der im Betrieb befindlichen Mitnehmer verändern.

Weitere Vorteile liegen in der besseren Zugänglichkeit der Mitnehmer und den Wartungs- und Pflegeerleichterungen. Defekte Mitnehmer lassen sich leichter austauschen und reparieren.

Die Mitnehmer werden nach Bedarf und z.B. automatisch oder bedienergesteuert mittels einer maschinellen Trenn- und Verbindungsvorrichtung mit dem Schleppelement gekoppelt und gelöst. Die Vorrichtung kann über eine Bedarfsmeldeeinrichtung ferngesteuert werden. Dies kann z.B. eine automatische Erfassungseinrichtung sein, welche die momentane Anlagenauslastung oder die Zahl der wartenden Fahrzeuge oder andere maßgebliche Faktoren, z.B. die Schleppgeschwindigkeit oder dgl., ermittelt. Die Vorrichtung lässt sich auch von einem Bediener per Tastendruck oder dergl. steuern.

Das Schleppelement kann unterschiedlich ausgebildet sein. In einer beispielhaften Ausführungsform handelt es sich um eine Doppelstrangkette mit lösbar eingehängten Mitnehmern, wobei die Kette in der Vertikalen endlos umläuft. Die Trenn- und Verbindungsvorrichtung lässt sich dabei platzsparend und störungsfrei z.B. unterirdisch unterbringen und mit dem Untertrum der Doppelstrangkette verbinden. Das Schleppelement kann klein und niedrig bauen. Es kann auch eine Seitenführung für die Fahrzeugräder bieten. Alternativ sind andere Arten und Konstruktionen von Schleppelementen möglich.

Die Trenn- und Verbindungsvorrichtung kann in beliebig geeigneter Weise ausgeführt sein. Die beanspruchte Ausführungsform hat den Vorteil, dass sich die Mitnehmer besonders leicht über taschenförmigen Aufnahmen von dem Schleppelement lösen und mit diesem wieder verbinden lassen. Die gelösten Mitnehmer können in einem Speicher zwischengelagert werden, so dass das Schleppelement ungestört laufen kann. Im Interesse einer maximalen Schonung der Mitnehmer werden diese z.B. automatisch nach dem Schleppvorgang vom Schleppelement gelöst und zwischengespeichert. Über den Zwischenspeicher kann ein Überschuss an Mitnehmern bevorratet werden.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1 und 2:: eine Autowaschstraße in Seitenansicht und Draufsicht mit einer Schleppeinrichtung und einer Trenn- und Verbindungseinrichtung für Mitnehmer,
- Figur 3:: eine abgebrochene perspektivische Ansicht einer Schleppeinrichtung mit der Trenn- und Verbindungsvorrichtung für Mitnehmer,
- Figur 4 und 5:: eine Seitenansicht und eine geklappte Draufsicht auf die Anordnung von Figur 3,
- Figur 6:: ein Längsschnitt durch die Anordnung von Figur 5 gemäß Schnittlinie VI/VI,
- Figur 7:: ein Querschnitt durch die Anordnung von Figur 4 gemäß Schnittlinie VII/VII,
- Figur 8:: eine vergrößerte Detaildarstellung des Ausschnitts VIII von Figur 6,
- Figur 9:: eine perspektivische Ansicht eines Mitnehmers,
- Figur 10:: eine Seitenansicht des Mitnehmers von Figur 9,
- Figur 11:: ein Längsschnitt durch den Mitnehmer gemäß Schnittlinie XI/XI von Figur 10,
- Figur 12:: eine perspektivische Darstellung eines Kettenglieds mit einer formschlüssigen Aufnahme für einen Mitnehmer,
- Figur 13 und 14:: eine Seitenansicht und eine geklappte Draufsicht des Kettenglieds
- Figur 15:: eine Stirnansicht des Kettenglieds gemäß Pfeil XV von Figur 13 und
- Figur 16:: ein Querschnitt durch das Kettenglied gemäß Schnittlinie XVI/XVI von Figur 13.

Die Erfindung betrifft eine Schleppeinrichtung (6) und ein Schleppverfahren für Fahrzeuge (2) in Fahrzeugbehandlungsanlagen (1) und außerdem eine mit einer solchen Schleppeinrichtung (6) ausgerüstete Fahrzeugbehandlungsanlage (1).

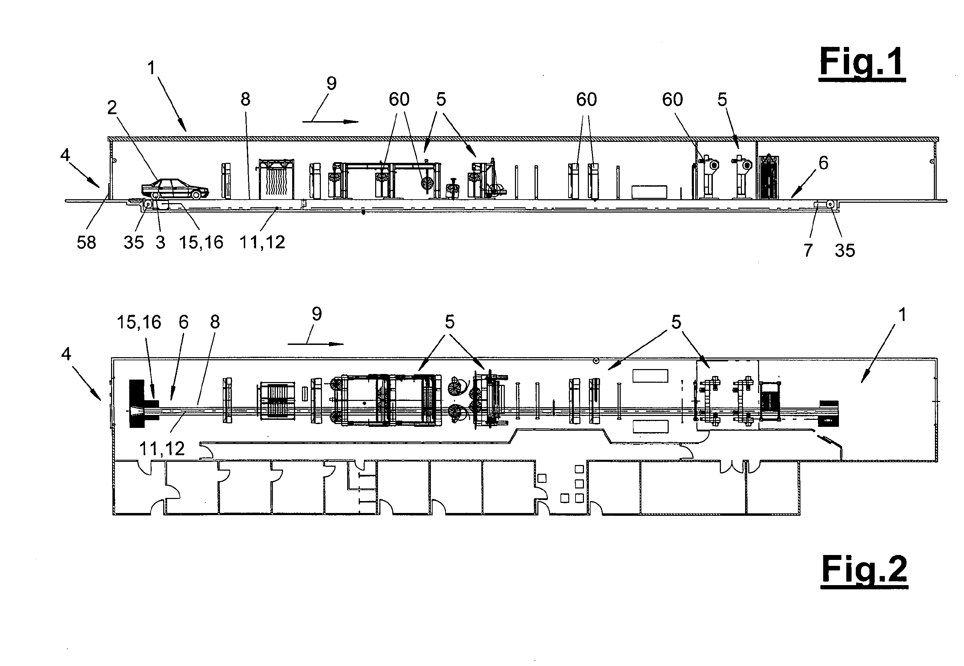

Figur 1 und 2 zeigen eine solche Fahrzeugbehandlungsanlage (1) in Seitenansicht und Draufsicht. Im gezeigten Ausführungsbeispiel handelt es sich um eine Autowaschstraße, in der die Fahrzeuge (2) mittels der Schleppeinrichtung (6) am Eingangsbereich (4) aufgenommen und durch eine Reihe aufeinander folgender Stationen (5) bis zu einem Ausgang geschleppt werden. Die Stationen (5) können von beliebiger Art, Zahl und Größe sein. Sie sind mit ein oder mehreren Behandlungsaggregaten (60) ausgerüstet. Bei der Autowäsche sind dies Wascheinrichtungen, Spül- und Auftragseinrichtungen, Pflege- und/oder Poliereinrichtungen, Trockeneinrichtungen und dergl.. Die Fahrzeugbehandlungsanlage (1) kann alternativ eine Polieranlage oder eine beliebige andere Behandlungsanlage für Fahrzeuge (2) sein.

Die Schleppeinrichtung (6) kann integraler Bestandteil der Fahrzeugbehandlungsanlage (1) sein. Sie kann alternativ an bestehenden Behandlungsanlagen (1) nachgerüstet oder umgerüstet werden. Während des Schleppvorgangs können die Fahrzeugräder (3) in beliebiger Art und Weise geführt werden, was z.B. durch eine stationäre Führung oder durch die Schleppeinrichtung (6) selbst geschehen kann.

Die Schleppeinrichtung (6) weist mindestens ein Schleppelement (11) mit mindestens einem Mitnehmer (14) auf, der in geeigneter Weise und Stelle am Fahrzeug (2), z.B. an einem Fahrzeugrad (3), angreift. Der Schleppvorgang kann eine beliebige Art der Mitnahme und Bewegung des Fahrzeugs (2) beinhalten. Im gezeigten Ausführungsbeispiel wird das Fahrzeugrad (3) vom Mitnehmer (14) hintergriffen und geschoben. Es kann alternativ gezogen oder mittels Platten oder dgl. getragen oder auf andere Weise bewegt werden.

Das Schleppelement (11) wird von einem Schleppantrieb (7), der z.B. ausgangseitig angeordnet ist, bewegt und angetrieben. Das Schleppelement (11) kann von beliebig geeigneter Art, Größe, Ausbildung und Anordnung sein. Vorzugsweise handelt es sich um ein endlos umlaufendes, strangförmiges Zugelement, welches z.B. als eine Kette (12) mit mehreren gelenkig untereinander verbundenen Kettengliedern (13) ausgebildet ist. In der bevorzugten und gezeigten Ausführungsform ist das Schleppelement (11) als Doppelstrangkette ausgebildet, welche zwei Kettenstränge (12) aufweist, die parallel und mit Abstand zueinander laufen, wobei die quer ausgerichteten Mitnehmer (14) zwischen den Kettensträngen angeordnet sind. Die nachfolgend im einzelnen erläuterten Mitnehmer (14) hintergreifen das Fahrzeugrad (3) und nehmen es während des Kettenvorschubs mit. Alternativ kann das Schleppelement (11) ein einzeln oder mehrfach angeordnetes Seil oder ein anderes geeignetes Zug- oder Schubelement oder sonstiges Antriebsmittel sein, mit dem ein oder mehrere Mitnehmer (14) bewegt werden und während der Bewegung das Fahrzeug (2) schleppen und mitnehmen. Das Schleppelement (11) kann auch eine andere Kinematik aufweisen und z.B. reversierend bewegt werden.

In der gezeigten Ausführungsform läuft das Schleppelement (11) bzw. die Doppelstrangkette in der Vertikalen um und ist an den Endbereichen über Umlenkräder (35) geführt. In der gezeigten Ausführungsform laufen die Kettenstränge offen und dienen zugleich als seitliche Führung für die zwischen Ihnen befindlichen Fahrzeugräder (3). Die Fahrzeugräder (3) rollen dabei auf einer Schleppbahn (8) ab. Alternativ kann das Schleppelement (11) bzw. die Doppelstrangkette von einer stationären Abdeckung zum Teil übergriffen werden, welche die seitliche Führung für die Fahrzeugräder (3) bildet.

Das Schleppelement (11) bzw. die Doppelstrangkette und die einfach oder mehrfach vorhandenen Mitnehmer (14) sind lösbar miteinander verbunden. Die Schleppeinrichtung (6) weist eine Vorrichtung (15) zum Trennen und Verbinden des oder der Mitnehmer (14) und des Schleppelements (11) auf. Die Schleppeinrichtung (6) besitzt ferner einen Speicher (16) für den oder die gelösten Mitnehmer (14). Die Funktion der Trenn- und Verbindungsvorrichtung (15) wird über eine Steuerung (nicht dargestellt) gesteuert, die mit einer Bedarfsmeldeeinrichtung (58) verbunden sein kann. Dies ist z.B. in der Variante von Figur 1 eine Sensorik, z.B. eine Lichtschranke, eine Kamera oder dgl. am Eingangsbereich (4) oder an anderer geeigneter Stelle der Behandlungsanlage (1) bzw. der Halle, mit der wartende und/oder einfahrende Fahrzeuge registriert werden. Alternativ kann die Bedarfsmeldeeinrichtung (58) ein manuell vom Anlagenpersonal zu bedienender Schalter, Taster oder dgl. sein. Ferner ist es möglich, die Vorrichtung (15) und die Schleppeinrichtung (6) in Abhängigkeit von der Betriebsfunktion der Wasch- oder Polieranlage zu steuern. In Ruhepausen der Anlage können z.B. die Vorrichtungen (5,6) weiterlaufen, bis alle Mitnehmer (14) geschützt untergebracht und/oder vom Schleppelement (11) gelöst sind. Bei Betriebsaufnahme der Anlage werden auch die Vorrichtungen (6,15) wieder eingeschaltet.

Bei der Schleppeinrichtung (6) sind in der bevorzugten Funktionsweise nur so viele Mitnehmer (14) tatsächlich im Eingriff mit dem Schleppelement (11), wie für den Schlepptransport der in der Anlage (1) befindlichen Fahrzeuge (2) benötigt werden. Nicht benötigte Mitnehmer (14) werden im Speicher (16) bevorratet. Die Speichergröße ist z.B. auf die bei maximaler Anlagenauslastung erforderliche Zahl von Mitnehmern (14) ausgelegt. Es kann auch mit einem Über- oder Unterschuss an Mitnehmern (14) gefahren werden. Insbesondere können so viele Mitnehmer (14) zuzüglich einer Reserve vorhanden sein, wie bei maximaler Anlagenauslastung an der Schleppbahn (9) Platz haben.

Die Mitnehmer (14) werden erst bei Bedarf und z.B. auf ein Anforderungssignal der Bedarfsmeldeeinrichtung (58) mittels der fernsteuerbaren Trenn- und Verbindungsvorrichtung (15) mit dem Schleppelement (11) verbunden. Die Trenn- und Verbindungsvorrichtung (15) befindet sich hierfür vorzugsweise am eingangsnahen Bereich (4) der Schleppeinrichtung (6). Sie kann alternativ aber auch an beliebig anderer Stelle angeordnet sein. Die Trenn- und Verbindungsvorrichtung (15) ist vorzugsweise außerhalb der Schleppbahn (8), z.B. unter dem Boden bzw. unter der Schleppbahn (8) unterirdisch angeordnet und steht mit dem Untertrum (38) des Schleppelements (11) in Verbindung. Das Obertrum (37) läuft an der Oberfläche in Bodenhöhe und bewegt die Mitnehmer (14) entlang der Schleppbahn (8) in Schlepprichtung (9). Die ein- oder mehrfach vorhandenen Stränge des Schleppelements (11) laufen hierbei in ein oder mehreren seitlichen Führungen (10) und stützen sich auf diesen bodenseitig ab.

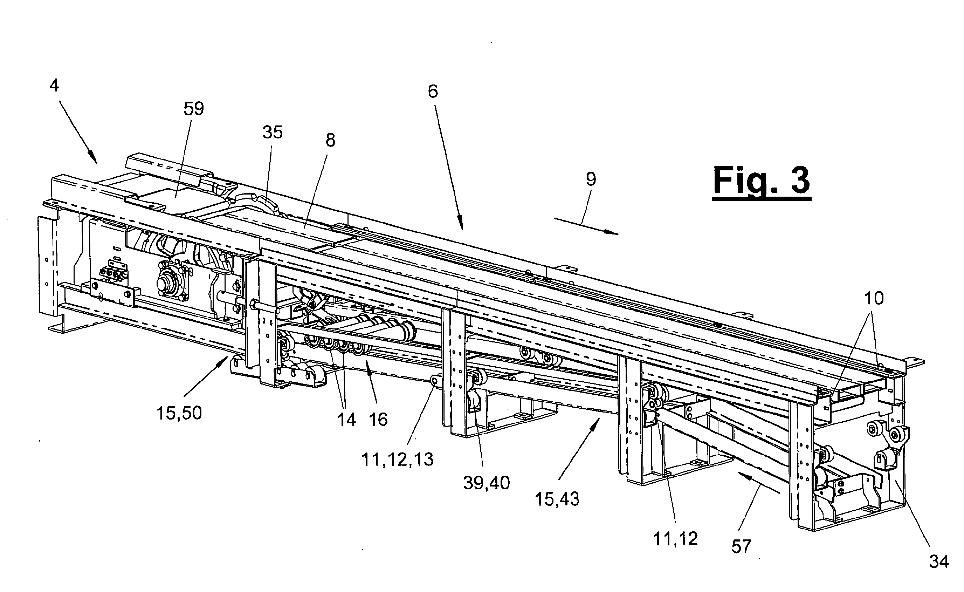

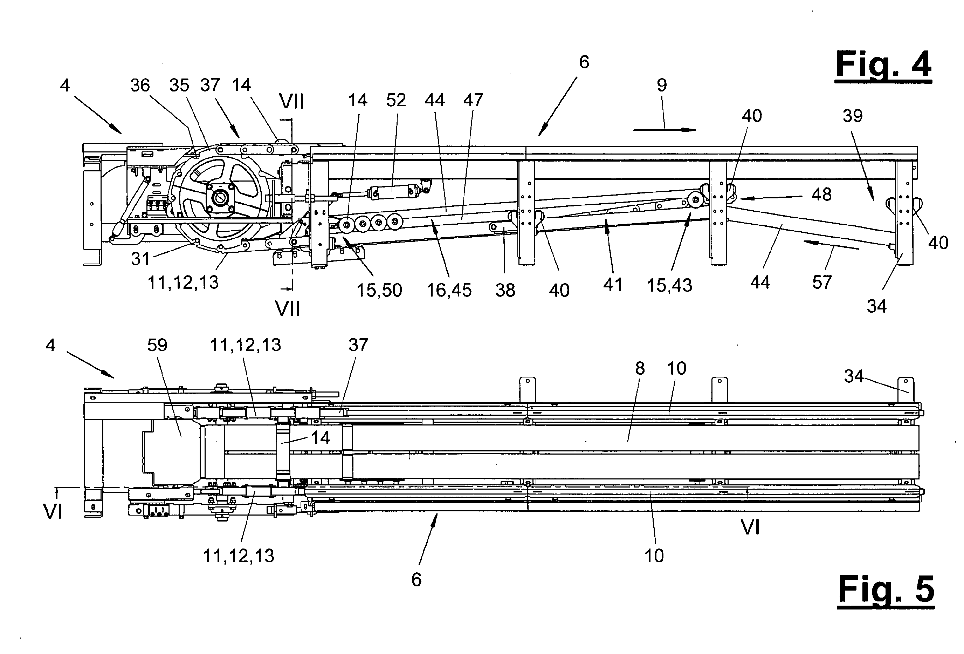

Wie Figur 3 bis 8 verdeutlichen, besitzt die Schleppeinrichtung (6) z.B. ein Gestell (34), welches in einem längslaufenden Schacht im Boden der Behandlungsanlage (1) angeordnet ist. Am vorderen und hinteren Gestellende sind die Umlenkräder (35) und der Schleppantrieb (7) gelagert. Die Gestelloberseite bildet die Schleppbahn (8) und die Führungen (10). Am Eingangsbereich (4) sind im Anschluss an eine Schwimmplatte eine Auffahrplattform und eine schwenkbare Auslassklappe (59) angeordnet, über welche die Doppelstrangkette und die Mitnehmer (14) nach oben treten.

Im Gestell (34) sind die Trenn- und Verbindungsvorrichtung (15) sowie verschiedene Komponenten einer Kettenführung (39) und einer Mitnehmerführung (44) angeordnet. Die Trenn- und Verbindungsvorrichtung (15) besteht aus einer Aushängevorrichtung (43), einem anschließenden Speicherabschnitt (45) und einer Einhängevorrichtung (50) für die Mitnehmer (14). Die maschinelle Trenn- und Verbindungsvorrichtung (15) kann ein oder mehrere steuerbare Antriebe aufweisen.

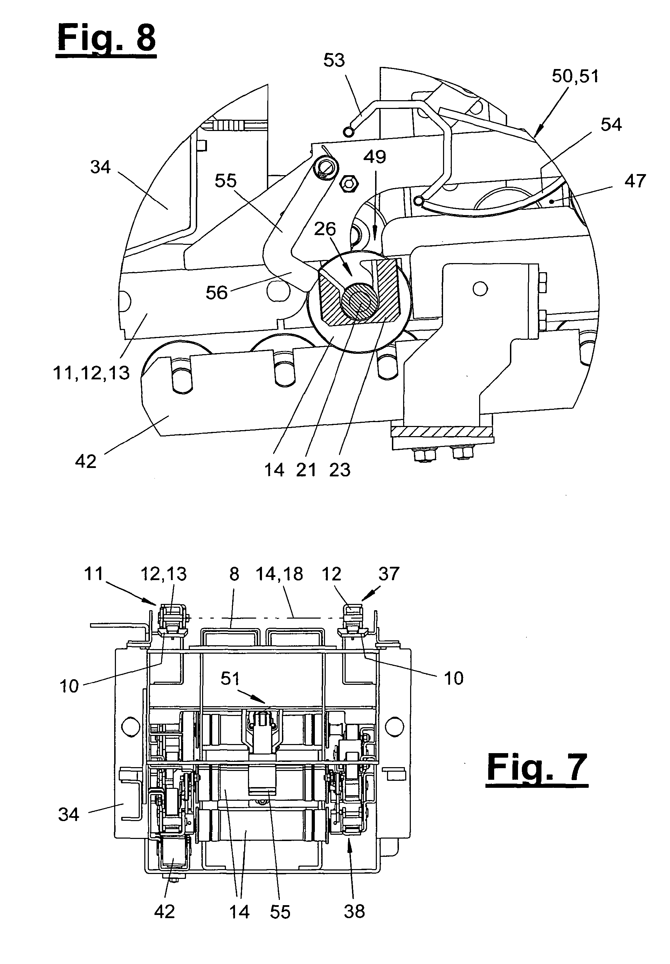

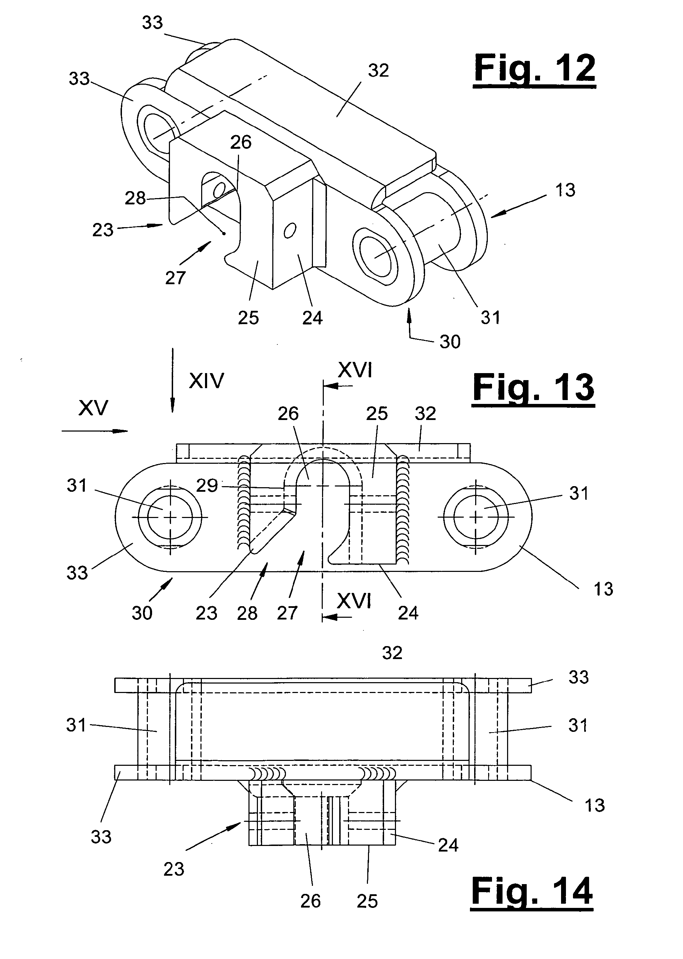

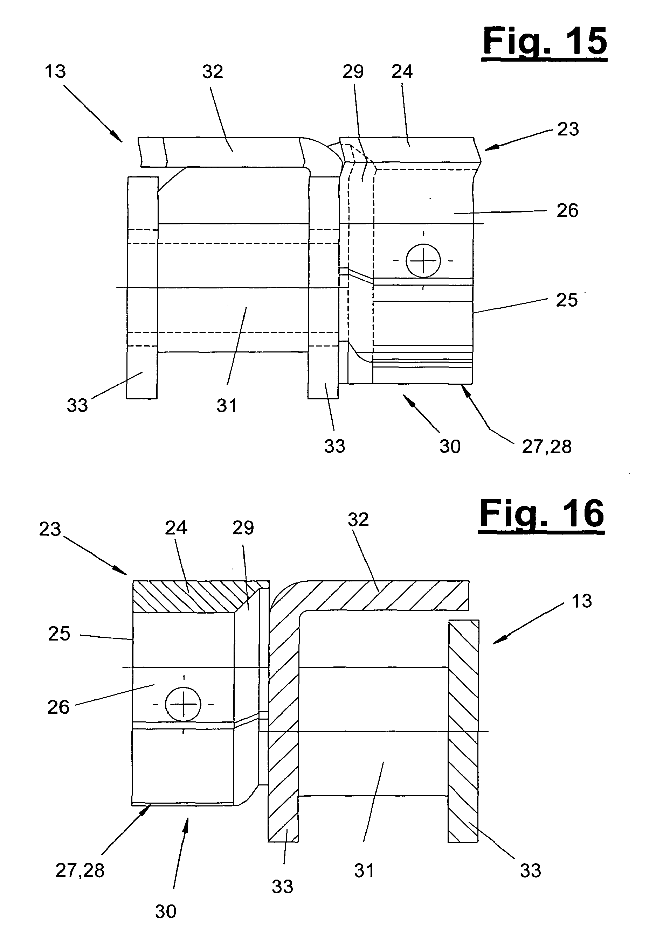

Wie Figur 8 in Verbindung mit Figur 12 bis 16 verdeutlichen, haben einige oder alle Kettenglieder (13) eine formschlüssige Aufnahme (23) für die Mitnehmer (14). Bei der gezeigten Doppelstrangkette sind die Aufnahmen (23) paarweise und beidseits auf gleicher Höhe an der Innenseite der Kettenglieder (13) angeordnet, so dass der formschlüssig eingehängte Mitnehmer (14) quer zur Schlepprichtung (9) ausgerichtet ist.

Die formschlüssigen Aufnahmen (23) sind jeweils taschenförmig ausgebildet und weisen ein hohles Gehäuse (24) auf, welches an der Unterseite (30) eine Gehäuseöffnung (28) besitzt, die quer zur Strangrichtung bzw. Schlepprichtung (9) weist. Das Gehäuse (24) hat an seiner zur Schleppbahn (8) weisenden Seitenwand (25) einen abgewinkelten Aufnahmeschlitz (26) für ein Lagerelement (21) des Mitnehmers (14). Der Aufnahmeschlitz (26) ist ebenfalls zur Unterseite (30) hin offen (27). Durch die Winkelform hat der Aufnahmeschlitz (26) einen quer zur Strangrichtung bzw. Förderrichtung (9) sich erstreckenden Aufnahmebereich und einen schräg zur Schlitzöffnung (27) sich erstreckenden Einlaufbereich, der am Obertrum (37) in Schlepprichtung (9) bzw. am Untertrum (38) in Förderrichtung (57) weist. Der Mitnehmer (14) fängt sich durch diese Schlitzform selbst und kann nicht unbeabsichtigt die formschlüssige Aufnahme (23) verlassen. Der Aufnahmeschlitz (26) weist im Gehäuseinneren außerdem eine Hinterschneidung (29) auf, in die ein Bund (22) des Mitnehmers (14) formschlüssig eingreift. Die Hinterschneidung (29) und der Bund (22) können die gezeigte kegelstumpfartige Gestalt oder eine beliebige andere Formgebung haben.

Wie Figur 12 bis 16 verdeutlichen, besteht das Kettenglied (13) aus zwei parallelen Kettenlaschen (33) mit zwei endseitigen querliegenden Kettenbolzen (31). Die mit formschlüssigen aufnahmen (23) versehenen Kettenglieder (13) sind z.B. schmaler als die jeweils benachbarten Kettenglieder (nicht dargestellt), welche mit ihren Kettenlaschen außenseitig die Kettenglieder (13) umfassen. Die Aufnahme (23) ragt dadurch nicht oder nur wenig über die seitliche Kettenkontur vor.

Die Umlenkräder (35) haben Kettenmitnehmer (36), z.B. die dargestellten Nuten oder Kettenzähne, die an den Kettenbolzen (31) angreifen und diese fördern. Die beiden Kettenstränge (12) laufen dabei synchron, wobei sich vorzugsweise die Kettenglieder (13) in Schlepprichtung (9) paarweise auf gleicher Höhe befinden.

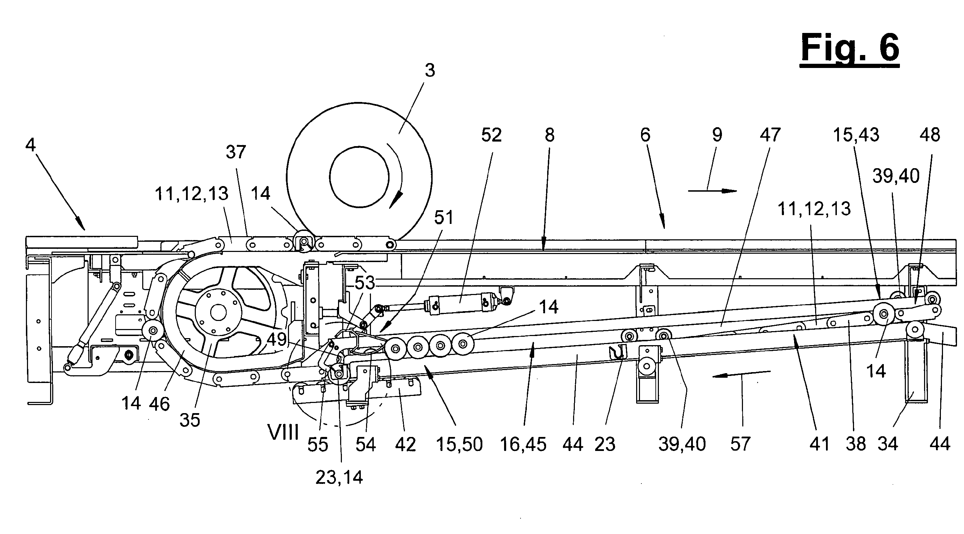

Die mit einer formschlüssigen Aufnahme (23) versehenen Kettenglieder (13) besitzen außerdem an der Oberseite eine die Kettenlaschen (33) verbindende Deckplatte (32), die auch eine Lager- und Gleitfläche bildet. Wie Figur 6 und 8 verdeutlichen, weisen bei den am Untertrum (38) befindlichen Aufnahmen (23) die Schlitzöffnungen (27) und die Gehäuseöffnungen (28) nach oben. Im Bereich des Obertrums (37) weisen sie nach unten zur bodenseitigen Führung (10) des Schleppelements (11). Hierdurch können am Untertrum (38) die Mitnehmer (14) aus den formschlüssigen Aufnahmen (23) über die Öffnungen (27,28) entnommen und eingelegt werden. Am Obertrum (37) halten die Aufnahmen (23) die Mitnehmer (14) formschlüssig fest und sichern den Schleppverbund und die Funktionslage der Mitnehmer (14). Die formschlüssigen Aufnahmen (23) haben z.B. die gleiche Höhe wie die Kettenlasche (33) und schließen an der Unterseite (30) bündig an deren Rand an. Am Obertrum (37) liegen die Aufnahmen (23) ebenfalls auf der Führung (10) auf, wodurch die Schlitzöffnungen (27) verschlossen werden.

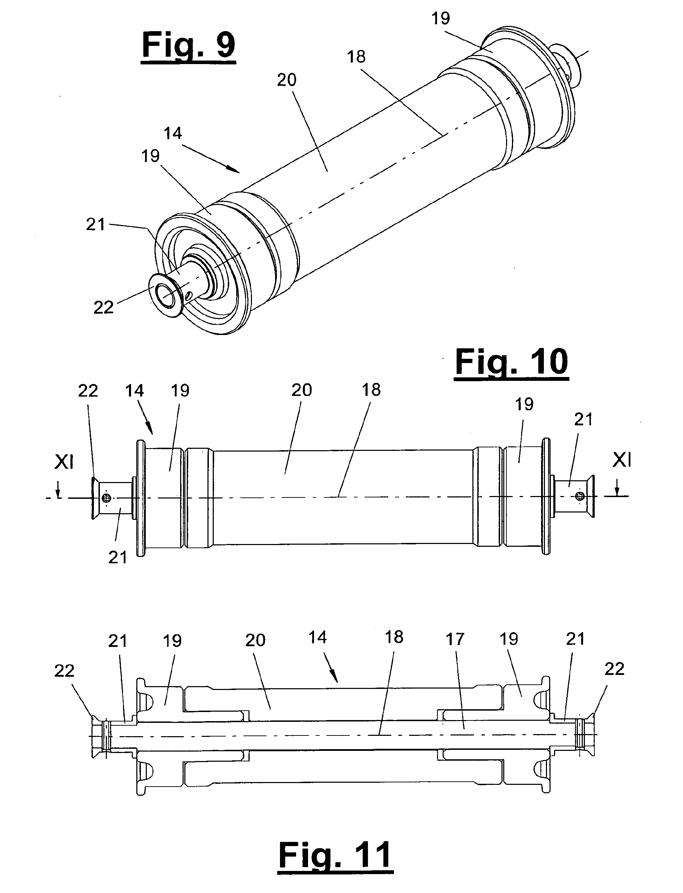

Figur 9 bis 11 zeigen einen Mitnehmer (14) in beispielhafter Ausführung. Er ist vorzugsweise als Rollkörper ausgebildet und besteht aus einem zentralen Achskörper (17) mit der querliegenden Drehachse (18), auf dem endseitig zwei z.B. hülsenartige Lagerelemente (21) aufgesteckt und mit Querbolzen drehschlüssig gesichert sind. Die Lagerhülsen (21) weisen an den äußeren Enden den vorerwähnten Bund (22) auf. Die Lagerhülsen (21) stehen stirnseitig über den eigentlichen Rollkörper des Mitnehmers (14) vor und tauchen in die formschlüssigen Aufnahmen (23) ein.

Der Mitnehmer (14) weist ferner beidseits im Anschluss an die Lagerelemente (21) zwei frei drehbar auf dem Achskörper (17) gelagerte Laufrollen (19) auf, die sich auf der Schleppbahn (8) rollend abstützen können und ggf. endseitig einen Bund besitzen, der unter Bildung einer Seitenführung in eine Vertiefung an den Rändern der Schleppbahn (8) greift. Zwischen den Laufrollen (19) ist zentral eine ebenfalls frei drehbare Mitnehmerrolle (20) angeordnet, welche z.B. auf zwei verjüngten Lagersitzen der Laufrollen (19) gelagert ist. Die Mitnehmerrolle (20) hintergreift das Fahrzeugrad (3) und kann sich gegenüber den im Durchmesser größeren Laufrollen (19) um die Achse (18) frei und entgegengesetzt drehen.

Die Aushängevorrichtung (43) dient zum Trennen der Mitnehmer (14) vom Schleppelement (11) am Untertrum (38). In der gezeigten Ausführungsform weist sie räumlich auseinander laufende und vor allem in der Höhe unterschiedliche Führungen (39,44) für das Schleppelement (11) bzw. die Kettenstränge (12) und die Mitnehmer (14) auf. Bis zur Aushängevorrichtung (43) sind die Kettenstränge (12) und die Mitnehmer (14) gemeinsam über die Kettenführung (39) geführt, die z.B. im Dreieck angeordnete Führungsrollen (40) an den Ständern des Gestells (34) aufweist. Die Mitnehmer (14) sind dabei über die Aufnahmen (23) an den Kettensträngen (12) eingehängt und werden von diesen mitgeführt. Vor Beginn der Aushängevorrichtung (43) kann die Kettenführung (39) eine Steigstrecke aufweisen.

An der Aushängevorrichtung (43) weist die Kettenführung (39) einen abwärts geneigten Führungsabschnitt (41) auf. Für die Mitnehmer (14) ist eine spezielle Mitnehmerführung (44) vorhanden, die z.B. aus parallelen Führungsleisten besteht, die zwischen sich einen Führungsschlitz (47) zur Aufnahme der Lagerelemente (21) oder eines anderen Teils der Mitnehmer (14) bilden. Der Führungsschlitz (47) hat eine andere Höhenlage als der geneigte Kettenabschnitt (41). Die Mitnehmer (14) gelangen über die Einlauföffnung (48) in den Führungsschlitz (47) und werden hier erfasst sowie aus der Aufnahme (23) gehoben und vom Schleppelement (11) getrennt. Der Führungsschlitz (47) bildet einen Speicherabschnitt (45) für die Mitnehmer (14) und hat ebenfalls eine abwärts gerichtete Neigung, wobei der Neigungswinkel kleiner als beim geneigten Kettenführungsabschnitt (41) ist. Im Speicherabschnitt (45) werden die Mitnehmer (14) hintereinander aufgereiht und gestaut.

Der längs der Förderrichtung (57) sich erstreckende Führungsschlitz (47) hat an seinem hinteren Ende eine Auslauföffnung (49), die wieder zum Schleppelement (11) bzw. den Kettensträngen (12) weist und ggf. abgewinkelt ist. Figur 6 und 8 zeigen diese Anordnung. Die Auslauföffnung (49) mündet oberhalb des Schleppelements (11), welches in diesem Bereich über eine leistenförmige Unterstützung (42) mit mehreren frei drehbaren Stützrollen läuft. Auf den Stützrollen liegen die Kettenglieder (13) mit ihren Deckplatten (32) auf und werden mit den Aufnahmen (23) in einer aufnahmegerechten Position für das Zuführen eines Mitnehmers (14) gehalten und beim Kettenvorschub geführt.

Die Einhängevorrichtung (50) weist außer der Auflauföffnung (49) und der Unterstützung (42) eine Vereinzelungs- und Zuführvorrichtung (51) für die Mitnehmer (14) auf. Figur 6 und 8 zeigen diese Anordnung. Die Vereinzelungs- und Zuführvorrichtung (51) besitzt einen Greifbügel (53) und ein Trennelement (54) zum Vereinzeln und Zuführung eines Mitnehmers (14) zum Schleppelement (11). Der Greifbügel (53) und das Trennelement (54) sind miteinander verbunden und beweglich gelagert sowie mit einem steuerbaren Antrieb (52) verbunden. Der Greifbügel (53) hat eine nach unten offene Gabelform und fasst z.B. einen Mitnehmer (14) an der Mitnehmerrolle (20). Das an den Greifbügel (53) direkt anschließende Trennelement (54) ist z.B. als gebogene Leiste ausgebildet, die beim Greifen des ersten Mitnehmers (14) zugleich schräg gegen den folgenden Mitnehmer (14) drückt und diesen am Weiterrollen entlang des schrägen Führungsschlitzes (47) hindert. Über den mit der Steuerung und der Bedarfsmeldeeinrichtung (58) verbundenen Antrieb (52), der z.B. als pneumatischer Zylinder, als elektromotorischer Antrieb oder in beliebig anderer Weise ausgebildet ist, werden der Greifbügel (53) und das Trennelement (54) vor und zurück geschwenkt. In der vorderen Schwenkstellung gemäß Figur 8 gibt der Greifbügel (53) den Mitnehmer (14) frei, so dass dieser in die Auflauföffnung (49) gelangt und durch sein Eigengewicht in die nach oben offene Aufnahme (23) an den beiden Kettensträngen (12) fallen kann.

Um ein vorzeitiges Herunterfallen des Mitnehmers (14) zu verhindern, ist an der Auslauföffnung (49) ein Führungshebel (55) schwenkbar gegen die Kraft einer Rückstellfeder hängend gelagert. Der Führungshebel (55) ist abgewinkelt und besitzt am freien Ende einen im wesentlichen quer abstehenden Leitarm (56), der in der federbeeinflussten Ruhestellung das Lagerelement (21) des Mitnehmers (14) untergreift und diesen in der Auslassöffnung (49) festhält. Der Führungshebel (55) kann für ein Zusammenwirken mit beiden Lagerelementen (21) beidseits vorhanden sein. Der oder die Leitarme (56) befinden sich außerdem im Bewegungsbereich der formschlüssigen Aufnahmen (23) und werden von diesen beim Kettenvorschub mitgenommen und in die von Figur 8 gezeigte Freigabestellung bewegt. In dieser Situation geben der oder die zurückgeschwenkten Führungshebel (55) den Mitnehmer (14) frei, so dass dieser mit seinen Lagerelementen (21) in die Schlitzöffnungen (27) und die Aufnahmeschlitze (26) fallen kann. Der beim Zurückschwenken schräg gestellte Leitarm (56) kann hierbei eine zum schrägen Einlaufbereich des Aufnahmeschlitzes (26) weisende Leitfläche für das Lagerelement (21) bilden.

Die Einhängevorrichtung (50) befindet sich vorzugsweise in unmittelbarer Nachbarschaft des eingangseitigen Umlenkrades (35). Die Mitnehmerführung (44) kann in diesem Bereich eine konzentrisch zur Radachse gebogene Umlenkführung (46) aufweisen, welche die Mitnehmer (14) stützt und am Herausfallen aus der formschlüssigen Aufnahme (23) hindert. Figur 6 zeigt diese Anordnung.

Abwandlungen der gezeigten Ausführungsformen sind in verschiedener Weise möglich, wobei auch die gezeigten und beschriebenen Merkmale beliebig untereinander kombiniert und vertauscht werden können. Dies betrifft die konstruktive Gestaltung der Mitnehmer (14) und auch der Trenn- und Verbindungsvorrichtung (15) und ihrer Komponenten. Auch die Kettenführungen (39) sowie die Mitnehmerführung (44) können abgewandelt werden. Ferner sind Variationen des Schleppelements (11) möglich. Dieses kann z.B. horizontal und in liegender Anordnung umlaufen. Ferner kann das Schleppelement (11) nur einen Strang mit einseitig eingehängten Mitnehmern (14) aufweisen. Statt als ein- oder mehrfach vorhandene Kette (12) kann das Schleppelement (11) auch in beliebiger anderer Weise ausgebildet sein. Es kann insbesondere ein oder mehrere biegeelastische Zugelemente, z.B. ein oder mehrere Seile, Bänder oder dergl. aufweisen. Ferner kann das Schleppelement (11) statt einer Umlauffunktion eine reversierende Betriebsweise haben.

### BEZUGSZEICHENLISTE

- 1: Fahrzeugbehandlungsanlage, Autowaschstrasse
- 2: Fahrzeug
- 3: Fahrzeugrad
- 4: Eingangsbereich
- 5: Station
- 6: Schleppeinrichtung
- 7: Schleppantrieb
- 8: Schleppbahn
- 9: Schlepprichtung
- 10: Führung
- 11: Schleppelement, Zugelement
- 12: Kette
- 13: Kettenglied
- 14: Mitnehmer
- 15: Vorrichtung zum Trennen- und Verbinden
- 16: Speicher für Mitnehmer
- 17: Achskörper
- 18: Achse
- 19: Laufrolle
- 20: Mitnehmerrolle
- 21: Lagerelement, Lagerhülse
- 22: Bund
- 23: formschlüssige Aufnahme, Aufnahmetasche
- 24: Gehäuse
- 25: Seitenwand
- 26: Aufnahmeschlitz
- 27: Schlitzöffnung
- 28: Gehäuseöffnung
- 29: Hinterschneidung
- 30: Unterseite
- 31: Kettenbolzen
- 32: Deckplatte
- 33: Kettenlasche
- 34: Gestell
- 35: Umlenkrad, Kettenrad
- 36: Kettenmitnehmer, Nut
- 37: Schlepptrum, Obertrum
- 38: Untertrum
- 39: Kettenführung
- 40: Führungsrollen
- 41: geneigter Führungsabschnitt Kette
- 42: Unterstützung
- 43: Aushängevorrichtung
- 44: Mitnehmerführung
- 45: Speicherabschnitt
- 46: Umlenkführung
- 47: Führungsschlitz
- 48: Einlauföffnung
- 49: Auslauföffnung
- 50: Einhängevorrichtung
- 51: Vereinzelungs- und Zuführvorrichtung
- 52: Antrieb
- 53: Greifbügel
- 54: Trennelement
- 55: Führungshebel
- 56: Leitarm
- 57: Förderrichtung
- 58: Bedarfsmeldeeinrichtung
- 59: Auslassklappe
- 60: Behandlungsaggregat

## Patentansprüche

1. Schleppeinrichtung für Fahrzeuge (2) in Fahrzeugbehandlungsanlagen (1), insbesondere Autowaschstrassen, bestehend aus mindestens einem Schleppelement (11) mit mindestens einem Mitnehmer (14) für ein Fahrzeugrad (3), **dadurch**
**gekennzeichnet, dass** das Schleppelement (11) und der oder die Mitnehmer (14) lösbar miteinander verbunden sind und die Schleppeinrichtung (6) eine Vorrichtung (15) zum Trennen und Verbinden von Mitnehmer(n) (14) und Schleppelement (11) aufweist.

2. Schleppeinrichtung nach Anspruch 1, **dadurch**
**gekennzeichnet, dass** die Schleppeinrichtung (6) einen Speicher (16) für mindestens einen gelösten Mitnehmer (14) aufweist.

3. Schleppeinrichtung nach Anspruch 1 oder 2, **dadurch gekennzeichnet, dass** die Trenn- und Verbindungsvorrichtung (15) eine Steuerung aufweist, die mit einer Bedarfsmeldeeinrichtung (58) verbunden ist.

4. Schleppeinrichtung nach Anspruch 1, 2 oder 3, **dadurch gekennzeichnet, dass** das Schleppelement (11) mindestens eine formschlüssige Aufnahme (23) für ein Lagerelement (21) des Mitnehmers (14) aufweist.

5. Schleppeinrichtung nach einem der vorhergehenden Ansprüche, **dadurch gekennzeichnet, dass** das Schleppelement (11) als endlos umlaufendes strangförmiges Zugelement ausgebildet ist.

6. Schleppeinrichtung nach einem der vorhergehenden Ansprüche, **dadurch gekennzeichnet, dass** das Schleppelement (11) in der Vertikalen umläuft und ein bodenseitiges, schleppendes Obertrum (37) und ein unter dem Boden laufendes Untertrum (38) aufweist.

7. Schleppeinrichtung nach einem der vorhergehenden Ansprüche, **dadurch gekennzeichnet, dass** das Schleppelement (11) als Kette (12) mit mehreren gelenkig verbundenen Kettengliedern (13) ausgebildet ist, wobei einige oder alle Kettenglieder (13) eine formschlüssige Aufnahme (23) für die Mitnehmer (14) aufweisen.

8. Schleppeinrichtung nach einem der vorhergehenden Ansprüche, **dadurch gekennzeichnet, dass** das Schleppelement (11) als Doppelstrang-Kette ausgebildet ist.

9. Schleppeinrichtung nach einem der vorhergehenden Ansprüche, **dadurch gekennzeichnet, dass** die Doppelstrang-Kette mehrere paarweise und beidseits auf gleicher Höhe angeordnete formschlüssige Aufnahmen (23) aufweist.

10. Schleppeinrichtung nach einem der vorhergehenden Ansprüche, **dadurch gekennzeichnet, dass** die Trenn- und Verbindungsvorrichtung (15) unterirdisch, insbesondere am Untertrum (38), angeordnet ist.

11. Schleppeinrichtung nach einem der vorhergehenden Ansprüche, **dadurch gekennzeichnet, dass** die formschlüssige Aufnahme (23) taschenförmig ausgebildet ist und einen hinterschnittenen (29) Aufnahmeschlitz (26) für das Lagerelement (21) aufweist.

12. Schleppeinrichtung nach einem der vorhergehenden Ansprüche, **dadurch gekennzeichnet, dass** die Trenn- und Verbindungsvorrichtung (15) eine Aushängevorrichtung (43) mit räumlich auseinander laufenden Führungen (39,44) für das Schleppelement (11) und die Mitnehmer (14) aufweist.

13. Schleppeinrichtung nach einem der vorhergehenden Ansprüche, **dadurch gekennzeichnet, dass** die Trenn- und Verbindungsvorrichtung (15) eine Einhängevorrichtung (50) mit einer Vereinzelungs- und Zuführvorrichtung (51) für die Mitnehmer (14) aufweist.

14. Schleppeinrichtung nach einem der vorhergehenden Ansprüche, **dadurch gekennzeichnet, dass** die Einhängevorrichtung (50) am Eingangsbereich (4) der Schleppeinrichtung (9) angeordnet ist.

15. Schleppeinrichtung nach einem der vorhergehenden Ansprüche, **dadurch gekennzeichnet, dass** der Speicher (16) zwischen der Aushängevorrichtung (43) und der Einhängevorrichtung (50) angeordnet ist.

16. Schleppeinrichtung nach einem der vorhergehenden Ansprüche, **dadurch gekennzeichnet, dass** die Mitnehmerführung (44) der Aushängevorrichtung (43) als Speicherabschnitt (45) für die Mitnehmer (14) ausgebildet ist.

17. Schleppeinrichtung nach einem der vorhergehenden Ansprüche, **dadurch gekennzeichnet, dass** die Mitnehmerführung (44) mindestens einen Führungsschlitz (47) für die Mitnehmer (14) aufweist, der sich schräg zur benachbarten Führung (39) des Schleppelements (11) erstreckt, wobei die Mitnehmer (14) vom Schleppelement (11) gelöst und ab gehoben werden.

18. Schleppeinrichtung nach einem der vorhergehenden Ansprüche, **dadurch gekennzeichnet, dass** der Führungsschlitz (47) an der Aushängevorrichtung (43) eine Einlauföffnung (48) und an der Einhängevorrichtung (50) eine wieder zum Schleppelement (11) weisende Auslauföffnung (49) aufweist.

19. Schleppeinrichtung nach einem der vorhergehenden Ansprüche, **dadurch gekennzeichnet, dass** die Vereinzelungs- und Zuführvorrichtung (51) einen Greifbügel (53) und ein Trennelement (54) zum Vereinzeln und Zuführen eines Mitnehmers (14) zum Schleppelement (11) aufweist.

20. Schleppeinrichtung nach einem der vorhergehenden Ansprüche, **dadurch gekennzeichnet, dass** der Greifbügel (53) und das Trennelement (54) beweglich gelagert und mit einem steuerbaren Antrieb (52) verbunden sind.

21. Schleppeinrichtung nach einem der vorhergehenden Ansprüche, **dadurch gekennzeichnet, dass** an der Auslauföffnung (49) des Führungsschlitzes (47) ein von der formschlüssigen Aufnahme (23) am Schleppelement (11) betätigbarer Führungshebel (55) angeordnet ist.

22. Schleppeinrichtung nach einem der vorhergehenden Ansprüche, **dadurch gekennzeichnet, dass** die formschlüssige Aufnahme (23) im Bereich des Untertrums (38) nach oben offen und im Bereich des Obertrums (37) nach unten geschlossen ist.

23. Schleppeinrichtung nach einem der vorhergehenden Ansprüche, **dadurch gekennzeichnet, dass** die formschlüssige Aufnahme (23) seitlich an einem Kettenglied (13) angeordnet ist und ein Gehäuse (24) mit einer quer zur Strangrichtung weisenden Gehäuseöffnung (28) und einem hier mündenden Aufnahmeschlitz (26) in der seitlichen Gehäusewand (25) aufweist.

24. Schleppeinrichtung nach einem der vorhergehenden Ansprüche, **dadurch gekennzeichnet, dass** der Aufnahmeschlitz (26) eine abgewinkelte Form aufweist.

25. Schleppeinrichtung nach einem der vorhergehenden Ansprüche, **dadurch gekennzeichnet, dass** die Öffnung des Aufnahmeschlitzes (26) im Bereich des Untertrums (38) nach oben weist und im Bereich des Obertrums (37) zu einer bodenseitigen Führung (10) des Schleppelements (11) weist.

26. Schleppeinrichtung nach einem der vorhergehenden Ansprüche, **dadurch gekennzeichnet, dass** die Schleppeinrichtung (6) mindestens ein Umlenkrad (35) für das Schleppelement (11) aufweist, wobei am Umlenkbereich eine Umlenkführung (46) für die Mitnehmer (14) angeordnet ist.

27. Schleppeinrichtung nach einem der vorhergehenden Ansprüche, **dadurch gekennzeichnet, dass** bei einer Doppelstrang-Kette zwei parallele und synchron laufende Umlenkräder (35) mit fluchtenden Kettenmitnehmern (36) angeordnet sind.

28. Verfahren zum Schleppen von Fahrzeugen (2) in Fahrzeugbehandlungsanlagen (1), insbesondere Autowaschstrassen, wobei das Fahrzeug (2), insbesondere ein Fahrzeugrad (3), mit mindestens einem Schleppelement (11) und mindestens einem Mitnehmer (14) geschleppt wird, **dadurch**
**gekennzeichnet, dass** der oder die Mitnehmer (14) und das Schleppelement (11) voneinander lösbar sind und mittels einer Vorrichtung (15) getrennt und verbunden werden.

29. Verfahren nach Anspruch 28, **dadurch**
**gekennzeichnet, dass** der oder die Mitnehmer (14) und das Schleppelement (11) nach Bedarf und automatisch gekoppelt und gelöst werden.

30. Verfahren nach Anspruch 28 oder 29, **dadurch**
**gekennzeichnet, dass** der oder die vom Schleppelement (11) gelösten Mitnehmer (14) zwischengespeichert werden.

31. Verfahren nach Anspruch 28, 29 oder 30, **dadurch**
**gekennzeichnet, dass** das Lösen, Speichern und Koppeln der Mitnehmer (14) verborgen außerhalb einer Schleppbahn (9) für das Fahrzeug (2) erfolgt.
